# EUROPEAN PATENT SPECIFICATION

(11) **EP 3 273 174 B1**
(45) Date of publication and mention of the grant of the patent: **07.06.2023**
(21) Application number: 17181984.0
(22) Date of filing: 18.07.2017
(51) Int. Cl.: F24H 1/10, F24H 9/00, F28F 9/02, F28F 13/06, F28F 13/12, A47J 31/54

(54) **LIQUID HEATING DEVICE**
VORRICHTUNG ZUR FLÜSSIGKEITSERHITZUNG
DISPOSITIF DE CHAUFFAGE DE LIQUIDE

(30) Priority: 18.07.2016 CZ 20160438
(43) Date of publication of application: 24.01.2018
(73) Proprietor: DROVEN HEATING a.s., 61300 Brno (CZ)
(72) Inventor: PREDNY, Jozef, 625 00 Brno (CZ); KURPEL, Lubomir, 91108 Trencin (SK)
(74) Representative: Tomickova, Dana

(56) References cited:
- WO-A1-2016/016225
- JP-A- 2004 020 095
- US-A- 1 858 665
- US-A- 2 775 683
- US-A1- 2011 036 544
- US-A1- 2014 023 353
- US-B1- 6 619 054

## Description

### Technical Field

The invention relates to a device for heating a liquid with a flow heat-exchange liquid system with at least one processing chamber with a heat-exchange wall, wherein the processing chamber has at least one liquid inlet and at least one liquid outlet.

### Prior Art

Liquid heating device with a flow heat-exchange liquid system, in particular domestic hot water and heating systems, are, with respect to the process dynamics in the embodiment, either stationary, i.e. in the form of a reservoir, or dynamic, i.e. in the form of a flow heating unit. In both cases, in terms of thermodynamics, it is a process of heat energy exchange at the solid and liquid environment interface by natural convection, in which the heat energy is supplied from an external source. There are known solutions in which the heat source is most often in the form of a flame or resistance heating spirals, less often sources of radiation with thermal effects on the division wall, or also a liquid energy source represented most commonly by superheated water or even water vapor, in accordance with the first law of thermodynamics, with a higher temperature than the desired output temperature of the liquid of the heating unit. At the same time, in an attempt to achieve the highest surface heat load, thus to maximize the amount of heat transferred by the heat-exchange area unit, the surface temperatures in today's heat-exchange liquid systems are so high that thermodynamically they create conditions for bubble or even film boiling of the liquid, in other words, the state in which the supply of energy causes occurrence of gaseous state of water, water vapor, in the heated liquid. As it is known, the mean molecular distance in gases is in the order of 15 decimal places higher, so the heat energy transfer ability between molecules in the area of the water vapor bubble occurrence drops sharply and the water vapor bubble disappears, which is accompanied by a distinctive acoustic effect known as a steam boiler noise. In the technical practice of industrial heat-exchange liquid systems, this phenomenon is prevented, for example, by increasing the static pressure of the liquid in the system. However, this solution is not applicable to domestic heat-exchange liquid systems because the water pressure in the grid is limited to maximum of 0.6 MPa, wherein the operating pressure in the heating liquid systems, especially of the open type with the expansion vessel, is even lower. Liquid heating in the said systems is accompanied by an acoustic effect, heating unit noise, which not only causes a decrease in the efficiency of the heat-exchange process but also produces annoying noise, causes oscillation of the water column in the pipeline, excretion of mineral salts on the heat-exchange surfaces and cavitation effects, which results in further decrease of the heat-exchange liquid system efficiency. Another possibility to prevent the occurrence of vapor bubbles and film boiling is to bring the liquid into the flow along the heat-exchange surface, thus to use forced convection, which is in the domestic heat-exchange liquid systems applicable only in flow heating systems with forced circulation but completely inapplicable in static reservoir heating systems and heating systems with natural circulation.

The patent application US 2011/0036544 A1 teaches a pillar sheathed heater, preferably a copper pipe, that is accommodated within a cavity of circular cross section in a substantially cylindrical case, which surrounds the outer periphery of the sheathed heater. Water flows onto an outer peripheral surface of the copper pipe in the sheathed heater and heat exchange is thus carried out between the copper pipe and water so the warm water is generated. Moreover, the spiral on that heater surface can prolong the path and direct liquid flow, increase the velocity of flow and cause impurity removals.

Another patent application US 2014/023353 A1 discloses a mixing header for fluid heater that is configured to disrupt flow of fluid. Said mixing header is made of plurality of vanes attached to and extending outwardly from a hub or a propeller type configuration is possible. The conditioning element may take the form of one or more vanes, blades, fins and/or other structures affixed to, or integrated with, the inner walls of the fluid passage. Mixing header may serve to mix fluid to prevent incoming fluid from flowing straight through the middle of the heating element tube. Mixing header may limit the size and formation of the boundary layer around the heating element inside diameter and thus improve efficiency of heating.

In the patent application WO 2016/016225 A1, which discloses the preamble of claim 1, a hollow heating tube for beverage preparation with a tubular flow passage and with an inlet flow deviating member at inlet end of the heating tube for forcing the flow of liquid entering the tubular passage of the heating tube in at least one direction away from the direction of central axis of the tubular passage, is described. The aim is to force the laminar flow and to divide the flow into multiple streams and forcing them away from the direction of the central axis of the tubular passage. The deviating member is perforated by off-centered openings which are preferably tubular and inclined to the centrally and axially extending axis and they promote swirling of the flow and renewing layers and minimizing flow resistance. It could be a lattice or grid. Perturbing member, e. g. static mixer, rotating blade or stirrer also contributes to creating turbulence of the flow.

In the patent document JP 2004 020095 an agitating tank with implemented propeller at the upper part of the tank is disclosed. Inside that tank, there are agitating pipes with flowing fluid with two kind of spiral band plates for turning the fluid in the opposite direction inside housing. The fluid in agitating pipes is heated by heating medium in a heat transfer agitating chamber.

The patent application US 2775683 A teaches heat exchanger for vaporizing volatile liquid in refrigerating systems with heated circumferential walls of processing chamber having axial liquid inlet and gas outlet with Archimedes spiral expanded throughout the whole processing chamber between inlet and outlet. There is no helical guide at the inlet of the chamber imparting a circumferential component of velocity of the movement to the flowing liquid. The path of the liquid is formed by the channel in said Archimedes spiral that slows down the flow of the liquid and therefore does not evolve higher pressure on the walls of the processing chamber.

In the patent application US 1858665 A there are two screw blades or short helical guides disclosed inside a straight tube serving as a circulating device for a boiler. The screw blades from a rectifying element at the tube inlet. Helical path is formed by the rectifying element with an axial inlet into the boiler tube.

The aim of this invention is a design of a flow heat-exchange liquid system arrangement with a forced energy exchange at the solid and liquid environment interface without the occurrence of bubble or film boiling of the liquid.

### Summary of the invention

The above-mentioned effect is achieved by a device for liquid heating according to claim 1 using a flow heat-exchange liquid system with at least one processing chamber having a heated heat-exchange circumferential wall of substantially circular cross-section, wherein the processing chamber has at least one liquid inlet and at least one liquid outlet, wherein the processing chamber is only at the liquid inlet provided with a rectifying element in the form of a helical guide imparting an axial and a circumferential component of the velocity of movement to the flowing liquid generating a centrifugal force and directing the flowing liquid in a rotary helical movement along the inner circumferential wall surface of the processing chamber, wherein the liquid inlet is connected to the processing chamber in a substantially tangential direction with respect to the inner surface of the substantially circular cross-section of the circumferential wall of the processing chamber.

The rectifying element according to the invention is arranged at the liquid inlet or in other solution not according to this invention it can be behind the liquid inlet to the processing chamber. In general, the closer to the inlet of the processing chamber the rectifying element is arranged, the more efficient heat transfer and liquid heating is achieved.

In another preferred embodiment optionally the outlet from the processing chamber may be conceived as pipeline (supply, drainage) or as an open space, e.g., another vessel around the processing chamber, wherein the liquid freely flows out of the processing chamber provided with the rectifying element.

An advantage of the present invention is that the liquid supplied to the processing chamber provided with the inlet positioned in a predominantly tangential direction and provided with at least one rectifying element is rotated in a rotary helical movement along the inner wall surface of the processing chamber of a predominantly circular cross-section where it moves for a significantly longer period in comparison to the prior art solutions. The predominantly circular cross-section includes cylindrical or conical shape of the processing chamber. Rotary helical movement of the liquid includes a component of axial and circumferential velocity of movement. The energy exchange at the solid and liquid environment interface as a result of the dynamic movement thus occurs during the helical movement of the heated liquid along the curved heat-exchange surface, whereby the liquid flow is continuously pressed against the wall of the processing chamber by the effect of the dynamic movement of the generated centrifugal force. At the same time, the turbulent boundary layer formed at the solid and liquid environment interface is influenced by the centrifugal force generated in the flowing liquid by movement along the curved path. This maintains the liquid overpressure manifested in higher system resistance to bubble or film boiling.

The said solution allows for a higher local liquid pressure at the solid and liquid environment interface as a result of the dynamic flow of the heated layer of the liquid, thus resulting in a significant increase in the heat energy transfer efficiency of the heat-exchange liquid systems.

### Description of drawings

The invention is further illustrated in the accompanying drawings, in which:
- Fig. 1 shows an embodiment with a tangential admission of the liquid inlet into the processing chamber also provided with a helical guide as the rectifying element_(see Fig. 3 below);
- Fig. 2 shows an embodiment with a tangential admission of the liquid inlet into the processing chamber also provided with the rectifying element, e.g., a helical guide (see Fig. 3 below), wherein the liquid outlet from the processing chamber is a free outlet to the second vessel;
- Fig. 3 shows the construction of the helical guide performing the function of the rectifying element with possible tangential and axial admission of the liquid inlet into the processing chamber; and

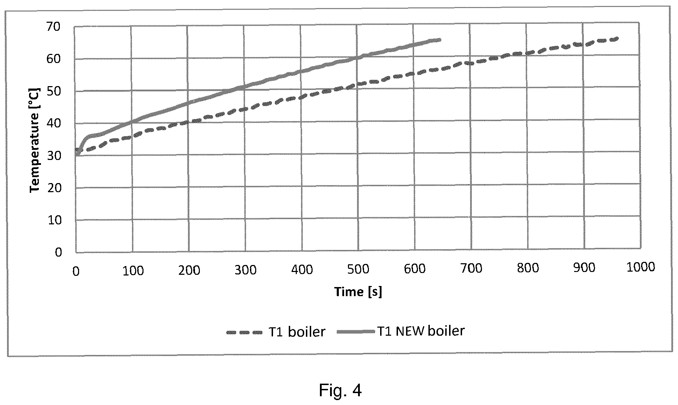

- Fig. 4 is a graph of the dependence of the heated liquid temperature on time in the liquid heating device of conventional construction (T1) and in the device according to the present invention (T1 NEW). In the test, the device according to the present invention (T1 NEW) reached the operating temperature of 65 °C of the heating system about 5 minutes earlier than the device of conventional construction (T1).

### Exemplary Embodiments of the Invention

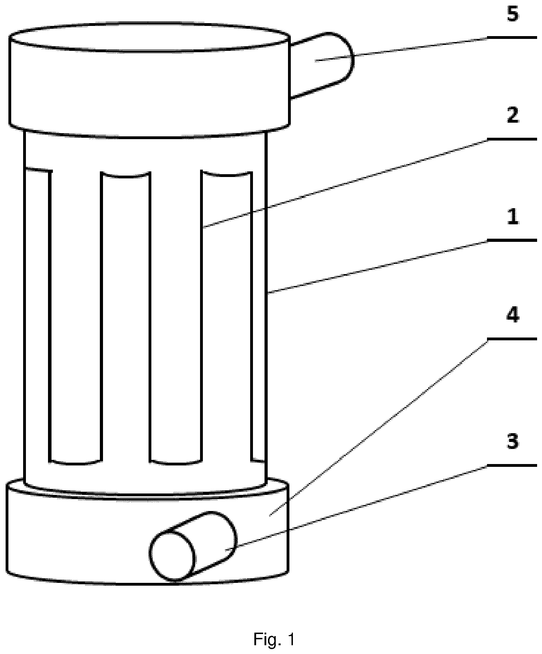

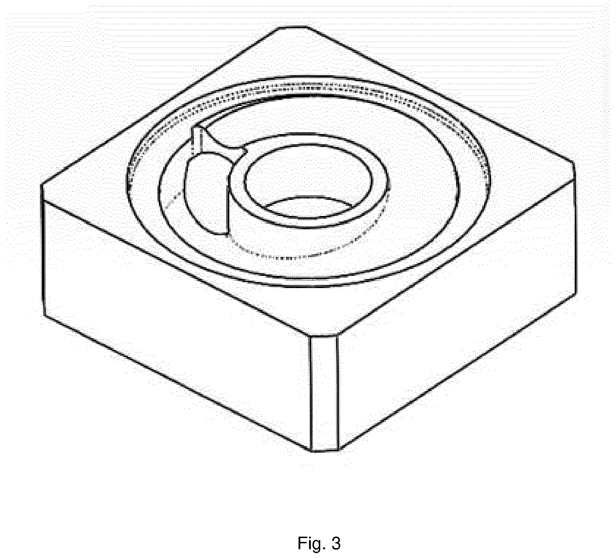

Embodiment according to Fig. 1 comprises the present liquid heating device controlled by a heated processing chamber 1 of a preferably circular cross-section with a heat-exchange wall connected to a heating element 2 (e.g., by a resistive conduit) connected to a control means (not shown) for heating control of the processing chamber 1. The processing chamber 1 is further provided with a tangential admission of the liquid inlet 3 with respect to the inner predominantly circular cross-section of the processing chamber 1. The inlet 3 is connected to the processing chamber 1 via a rectifying element 1 in the form of a helical guide (see Fig. 3). In order to ensure a helical flow of heated liquid inside the processing chamber 1, it is advantageous that its inner surface is of a predominantly or substantially circular cross-section. The processing chamber 1 has at least one outlet 5.

More than one rectifying element 1 may be used, optionally, more than one flow path connected to one or more inlets 3 admitted into the processing chamber 1 may be created in a single rectifying element 4.

The processing chamber 1 may also have more than one heating element 2 provided by any known technical means, suitably positioned along the wall of the processing chamber 1 to achieve the necessary thermal power. The heating element 2 may be incorporated directly into the wall of the processing chamber 1. Any sources of energy can be used for heating. A very suitable heating element 2 is an electrical resistance conductor connected directly to the surface of the processing chamber 1 by means of a printed heating element. This embodiment advantageously ensures virtually perfect immediate connection of the heating element 2 with the heat-exchange surface of the processing chamber 1.

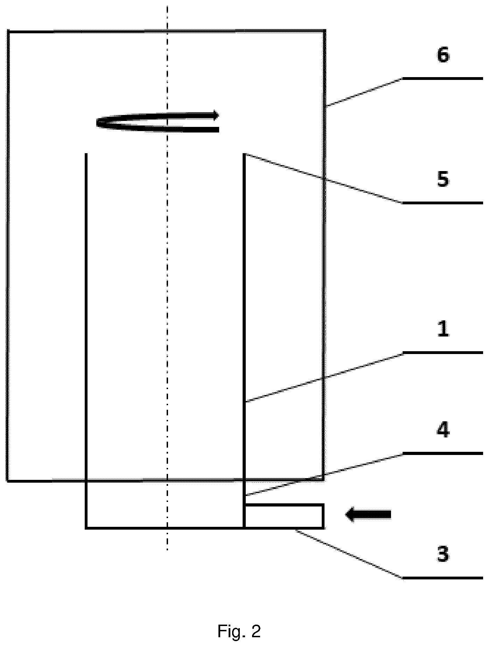

In the embodiment according to Fig. 2, the processing chamber 1 with tangential admission of the liquid inlet 3 is provided with a rectifying element 1 in the form of a helical guide (see Fig. 3). The liquid outlet 5 is provided as a free outlet into the middle second vessel 6, e.g. the heated water reservoir.

The device according to the present invention operates in the following manner:
Liquid flowing through the tangential admission of the inlet 3 and through the rectifying element 4, in which the liquid is forced by the canal curve into the rotary helical movement along the inner heat-exchange wall of the processing chamber 1 of predominantly circular cross-section heated by the heating element 2, is supplied from the pressure source (not shown) through the inlet 3 to the processing chamber 1 completely filled by the liquid. The centrifugal force is generated at the interface between the solid wall and the flowing liquid by a movement of the liquid along the curved path and said centrifugal force increases the local dynamic pressure in the boundary layer, whereby the process of the heat energy exchange at the interface of the solid wall and liquid is positively influenced depending on the flow rate and the energy input. The heating of the wall of the processing chamber 1 by the heating element 2 is simultaneously controlled by a control device (not shown) so that no bubble or film boiling of the liquid occurs on the side of the liquid contact with the wall of the processing chamber 1. Liquid heated by the pervading heat is drained from the processing chamber 1 by at least one outlet 5.

The said arrangement achieves that the flow of the supplied liquid flows around the inner surface of the processing chamber 1 along helical path and is thus in direct contact with the heated inner surface of the processing chamber 1 over a longer path and a substantially higher heat energy transfer from the wall of the processing chamber 1 to the flowing liquid is achieved in comparison to the processing chamber through which the heated medium flows in predominantly axial direction currently commonly used in the technical practice.

The said solution reduces production costs due to the smaller dimensions of the device while increasing operational reliability and service life.

### Industrial applicability

The present invention is directed in particular to flow heat-exchange liquid systems for carrying out a heat energy exchange process at the solid wall and liquid interface, in particular water heaters for forced circulation heating systems, optionally for storage accumulation vessels for domestic or industrial hot water production.

### List of reference signs

- 1: processing chamber
- 2: heating element
- 3: liquid inlet
- 4: rectifying element
- 5: liquid outlet
- 6: second vessel

## Claims

1. A device for liquid heating by means of a flow heat-exchange liquid system with at least one processing chamber (1) having a heated heat-exchange circumferential wall of a substantially circular cross-section, wherein the processing chamber (1) has at least one liquid inlet (3) and at least one liquid outlet (5), wherein the processing chamber (1) is only at the liquid inlet (3) provided with a rectifying element (4) imparting an axial and a circumferential component of the velocity of movement to the flowing liquid generating a centrifugal force and directing the flowing liquid in a rotary helical movement along the inner circumferential wall surface of the processing chamber (1), whereby the liquid inlet (3) is connected to the processing chamber (1) in a substantially tangential direction with respect to the inner surface of the substantially circular cross-section of the circumferential wall of the processing chamber (1), **characterized in that** the rectifying element (4) at the liquid inlet is a helical guide.

## Patentansprüche

1. Eine Vorrichtung zur Flüssigkeitserhitzung mittels eines Strömungswärmeaustauschflüssigkeitssystems mit mindestens einer Prozesskammer (1) mit einer beheizten Wärmeaustauschumfangswand eines im Wesentlichen kreisförmigen Querschnitts, wobei die Prozesskammer (1) mindestens einen Flüssigkeitseinlass (3) und mindestens einen Flüssigkeitsauslass (5) aufweist, wobei die Prozesskammer (1) nur an dem Flüssigkeitseinlass (3) mit einem Gleichrichterelement (4) versehen ist, das eine Axial- und eine Umfangskomponente der Bewegungsgeschwindigkeit auf die strömende Flüssigkeit ausübt, die eine Zentrifugalkraft erzeugt und die strömende Flüssigkeit in einer spiralförmigen Drehbewegung entlang der inneren Umfangswandfläche der Prozesskammer (1) leitet, wodurch der Flüssigkeitseinlass (3) mit der Prozesskammer (1) in einer im Wesentlichen tangentialen Richtung in Bezug auf die Innenfläche des im Wesentlichen kreisförmigen Querschnitts der Umfangswand der Prozesskammer (1) verbunden ist, **dadurch gekennzeichnet, dass** das Gleichrichterelement (4) am Flüssigkeitseinlass eine schraubenförmige Führung ist.

## Revendications

1. Un dispositif de chauffage de liquide au moyen d'un système de liquide d'échange de chaleur à écoulement avec au moins une chambre de traitement (1) ayant une paroi circonférentielle d'échange de chaleur chauffée d'une section transversale substantiellement circulaire, où la chambre de traitement (1) a au moins une entrée de liquide (3) et au moins une sortie de liquide (5), où la chambre de traitement (1) est uniquement au niveau de l'entrée de liquide (3) pourvue d'un élément de redressement (4) conférant une composante axiale et circonférentielle de la vitesse de mouvement au liquide en écoulement, générant une force centrifuge et dirigeant le liquide en écoulement selon un mouvement hélicoïdal rotatif le long de la surface de la paroi circonférentielle interne de la chambre de traitement (1), où l'entrée de liquide (3) est reliée à la chambre de traitement (1) dans une direction substantiellement tangentielle par rapport à la surface interne de la section transversale substantiellement circulaire de la paroi circonférentielle de la chambre de traitement (1), **caractérisé en ce que** l'élément de redressement (4) au niveau de l'entrée de liquide est un guide hélicoïdal.
